# EUROPEAN PATENT SPECIFICATION

(11) **EP 1 353 097 B1**
(45) Date of publication and mention of the grant of the patent: **22.11.2006**
(21) Application number: 03252277.3
(22) Date of filing: 10.04.2003
(51) Int. Cl.: F16J 15/32

(54) **Brush seal**
Bürstendichtung
Joint à brosses

(30) Priority: 10.04.2002 US 119498
(43) Date of publication of application: 15.10.2003
(73) Proprietor: UNITED TECHNOLOGIES CORPORATION, Hartford, CT 06101 (US)
(72) Inventor: Addis, Mark E., Kennebunk, Maine 04043 (US)
(74) Representative: Leckey, David Herbert

(56) References cited:
- EP-A- 0 453 315
- WO-A-02/21027

## Description

### BACKGROUND OF THE INVENTION

This invention relates to brush seals. Specifically, the invention relates to brush seals that have reduced clearances.

A brush seal includes a side plate, a back plate and bristles between the plates. Gas turbine engines commonly use brush seals to prevent secondary flow from escaping through a gap between a stationary part (*e.g*. a diffuser case) and a rotating part (*e.g*. a turbine shaft). In this arrangement, the bristles of the brush seal impede the ability of the secondary flow to pass between the stationary and rotating parts. The bristles impede the secondary flow by extending from the stationary part, into the gap, and into contact with the rotating part.

The back plate of the brush seal remains a distance away from the rotating part. The size of the clearance between the back plate and the rotating part directly affects the efficiency of the brush seal. A brush seal with a larger back plate clearance allows a greater amount of secondary flow to pass through the bristles. A brush seal with a smaller back plate clearance allows a lesser amount of secondary flow to pass through the bristles.

Conventional brush seals tend to have larger clearances. While less efficient, these larger clearances help the brush seal to avoid contact between the back plate and the rotating component during operation of the engine. Contact between the metallic back plate of a conventional brush seal and the metallic rotating component can damage the brush seal. For example, such contact between the brush seal and the rotating component can wear away the back plate. Wearing away the back plate increases the clearance between the brush seal and the rotating component.

Such contact between the metallic back plate and rotating component can also form burrs on the back plate. Any burrs present on the back plate could nick or cut the adjacently located bristles. Depending on the severity of damage to the bristles, the entire bristle pack could fail.

One solution to this problem has been to allow the brush seal to float between the stationary component and the rotating component. The use of a floating brush seal, however, increases the complexity and part count of the brush seal assembly.

### BRIEF SUMMARY OF THE INVENTION

It is an object of the present invention in its preferred embodiments at least to provide a new and improved brush seal.

It is a further object of the present invention in its preferred embodiments at least to provide a more efficient brush seal.

It is a further object of the present invention in its preferred embodiments at least to provide a brush seal that can be placed at a reduced clearance with the rotating component.

It is a further object of the present invention in its preferred embodiments at least to provide a brush seal that exhibits less wear after contact with the rotating component.

It is a further object of the present invention in its preferred embodiments at least to provide a brush seal that exhibits less damage after contact with the rotating component.

It is a further object ofthe present invention in its preferred embodiments at least to provide a brush seal that is not complex.

It is a further object of the present invention in its preferred embodiments at least to provide a brush seal that does not have a high part count.

From a first aspect, the present invention provides a brush seal according to claim 1.

From a yet further aspect the present invention provides a method of reducing a clearance between a brush seal and a component, as claimed in claim 7.

### BRIEF DESCRIPTION OF THE DRAWINGS

Other uses and advantages of the present invention will become apparent to those skilled in the art upon reference to the specification and the drawings, in which:
Figure 1 is a cross-sectional perspective view of a conventional brush seal engaging a rotor;
Figure 2 is a cross-sectional perspective view of a brush seal;
Figure 3a is a detailed view of a section of the brush seal in Figure 2;
Figure 3b is a detailed view of an alternative arrangement of the section in Figure 3a;
Figure 4 is a cross-sectional perspective view of another alternative embodiment of a brush seal;
Figure 5 is a cross-sectional perspective view of an embodiment of a brush seal of the present invention; and
Figure 6 is a side-by-side comparison of the conventional brush seal in Figure 1 and the brush seal of the present invention.

### DETAILED DESCRIPTION OF THE INVENTION

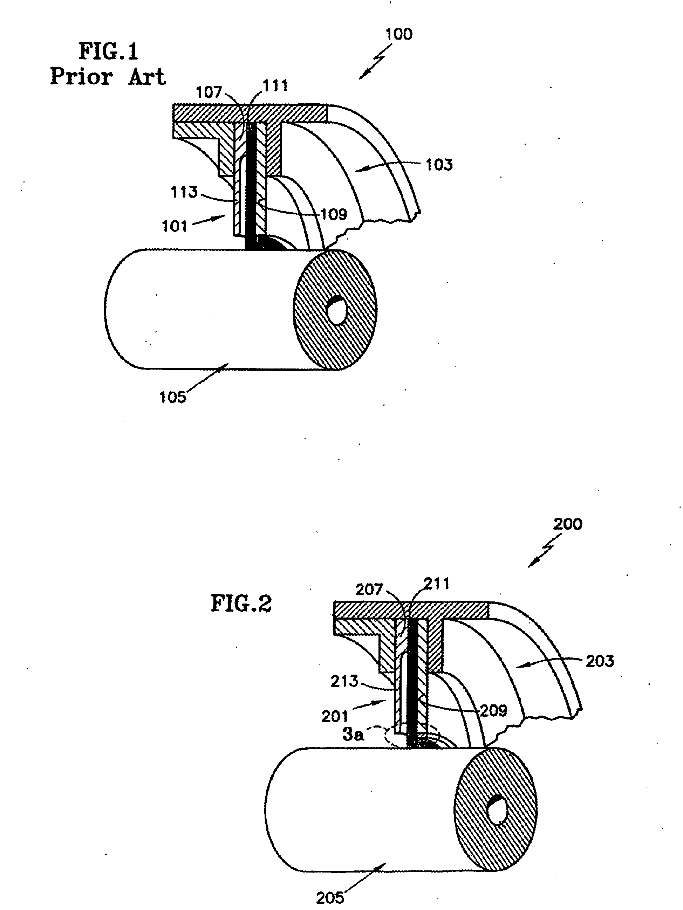

Figure 1 displays a conventional brush seal arrangement 100. The arrangement 100 includes a brush seal 101 rigidly secured to a first component 103 (typically a stationary component of the engine). The brush seal 101 extends from the first component 103 to engage a second component 105 (typically a rotating component of the engine).

The brush seal 101 includes a side plate 107, a back plate 109 and a bristle pack 111 between the plates 107, 109. The plates 107, 109 are made from suitable alloys, such as Inconel® or 400-series stainless steel. The side plate 107 can include a windage cover 113. Typically, the plates 107, 109 and the bristle pack 111 are welded together.

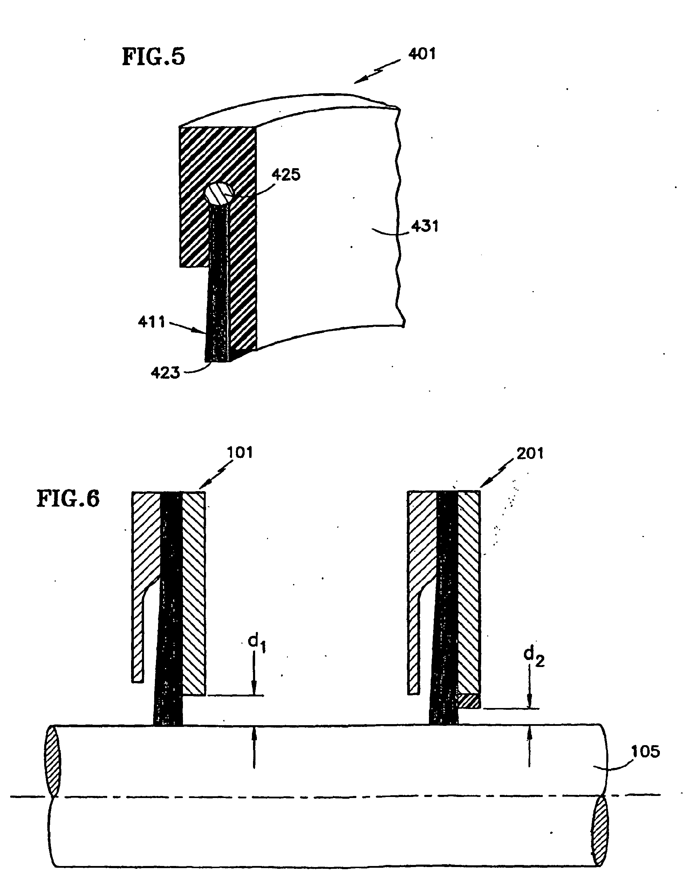

As seen in Figure 6, the back plate 109 of the brush seal 101 remains a distance d₁ from the second component 105. The distance d₁ is sufficient to ensure that the metallic back plate 109 tends to avoid contact with the metallic second component 105. As described above, avoiding contact between the back plate 109 and the second component 105 helps prevent damage to the brush seal 101.

Figure 2 displays a brush seal arrangement 200. The arrangement likewise includes a brush seal 201 rigidly secured to a first component 203. The brush seal 201 extends from the first component 203 to engage a second component 205.

Similar to the conventional brush seal 101, the brush seal 201 includes a side plate 207, a back plate 209 and a bristle pack 211 between the plates 207, 209. The side plate 207 can include a windage cover 213. The plates 107, 109 and the bristle pack 111 can be secured together using suitable techniques such as welding.

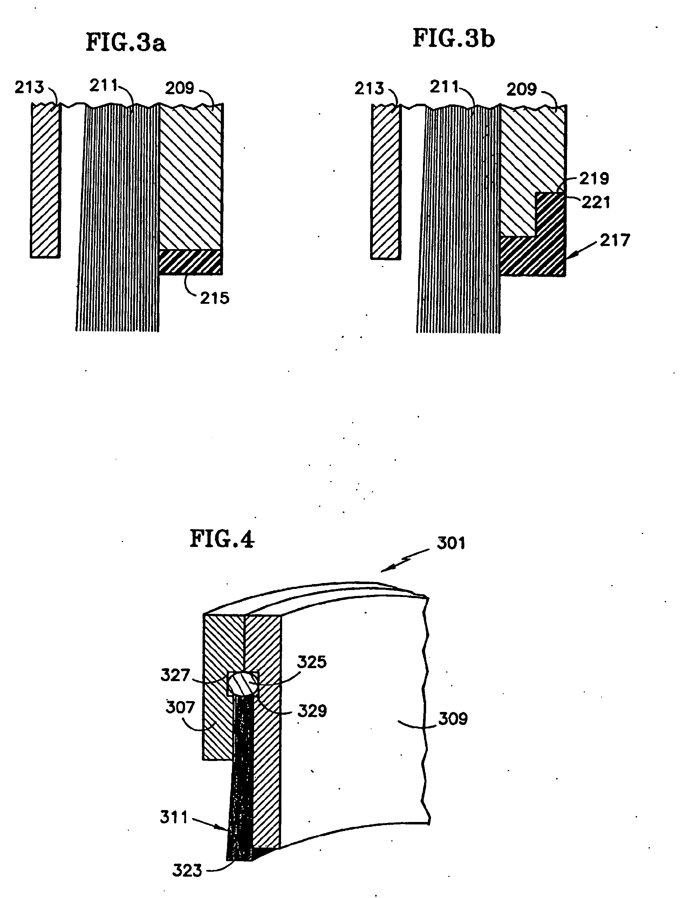

Figure 3a displays a detailed view of the distal end of the brush seal 201. In the arrangement shown in the figures, the distal end of the brush seal 201 is the inner diameter of the annular brush seal 201. The inner face of the back plate 209 has a coating 215 placed thereon using known techniques. Preferably, application of the coating 215 on the back plate occurs before assembly of the brush seal 201.

The coating 215 should be a material that tends not to produce burrs during contact with the rotating component. The coating 215 should also have capability to withstand the elevated temperatures encountered in the secondary flow of the engine. A suitable coating 215 could have a low coefficient of friction and/or a low wear rate. For example, the coating 215 could be a fluoropolymer such as PTFE. Alternatively, the coating 215 could be an abradable metal. (See e.g. EP-A-0453315).

Figure 3b displays a detailed view of an alternate configuration of the distal end of the brush seal 201. Rather than the coating 215 of Figure 3 a, the back plate 209 has an insert 217 secured thereto using known techniques. Depending upon the insert material, such techniques could include epoxy bonding or brazing. The back plate 209 could include a shoulder 219 to receive a correspondingly shaped extension 221 from the insert 217. Preferably bonding the insert 217 to the back plate occurs before assembly of the brush seal 201.

The insert 217 should likewise be a material that resists burrs during contact between the back plate 209 and the rotating component The insert 217 should also havecapability to withstand the elevated temperatures encountered in the secondary flow of the engine. As discussed above, a fluoropolymer like PTFE could be used. In addition, the insert 217 could also be made from carbon, graphite or sintered impregnated metal matrix materials.

The alternative arrangements described above are preferably used with brush seals having the typical bristle arrangement shown in Figure 2. The alternative embodiments described below are preferably used with brush seals having the bristle arrangement described in European Patent Application number 03250864.0. (EP-A-1335 157)
Figure 4 shows a brush seal 301. The brush seal 301 rigidly secures to a first component (not shown) and engages a second component (not shown).

The brush seal 301 includes a side plate 307, a back plate 309 and a bristle pack 311 between the plates 307,309. The annular bristle pack 311 (also referred to as a bristle ring) includes a plurality of bristles 323 secured together by a joint 325. The joint 325 forms while welding the alloy bristles 323 (such as cobalt) together during an earlier assembly step.

The plates 307, 309 each include a groove 327, 329 to receive the joint 325. The grooves 327,329 preferably prevent radial movement of the bristle pack 311 during engine operation without creating an interference fit. Differently than the earlier arrangements, the back plate 309 is made entirely from the aforementioned materials. For example, the back plate 309 could be made entirely from a suitable low coefficient of friction or low wear rate material. The back plate 309 could be made from these materials using known techniques such as injection molding, machining or extruding.

The plates 307, 309 secure together using suitable techniques such as epoxy or braze bonding or using rivets (not shown) or threaded fasteners (not shown). The metallic side plate 307 helps provide rigidity to the brush seal 301. If rigidity is not a concern, then the side plate 307 could also be made from the aforementioned materials. For example, the side plate 307 could also be made from a low coefficient of friction or low wear rate material. Preferably, the side plate 307 would be made from the same material as the back plate 309.

Figure 5 shows an embodiment of a brush seal 401 of the present invention. The brush seal 401 has a one-piece body 431 rather than the discrete side plates and back plates of the earlier described arrangements, which do not fall within the scope of the invention. The brush seal 401 also includes an annular bristle pack 411 with bristles 423 secured together by a joint 425. The body 431 retains the joint 425 and a section of the bristles 423.

The body 431 is made from a low coefficient of friction or low wear rate material, preferably plastic. The body is overmolded about the bristle pack 411 using known techniques.

Figure 6 displays the benefits of the present invention. Using suitable materials, brush seal of the present invention can position the back plate at a distance d₂ from the second component 105. The distance d₂ of the present invention is less than the distance d₁ of conventional brush seals with all-metallic back plates. The distance d₂ could be approximately 10-25% less than the distance d₁ of conventional brush seals. Figure 6 uses the seal of Figure 2 for purposes of illustration only and it should be understood that that seal does not fall within the scope of the invention.

The reduced clearance exhibited by the brush seal of the present invention helps increase efficiency. The efficiency of the brush seal increases as the gap between the brush seal and the rotating component decreases. A smaller gap impedes the ability of the secondary flow to pass between the stationary and rotating parts.

The reduced clearance of the present invention also helps prevent bristle blowover. Blowover occurs when the secondary flow begins to urge the bristles in the flow direction. The bristles tend to wrap under the back plate. Such bending of the bristles introduces stresses to the bristles.

Since the present invention has a reduced clearance, shorter lengths of the bristles extend in cantilever fashion from the back plate. In other words, the back plate of the present invention supports a greater length of the bristles. This support helps the bristles withstand the urging of the secondary flow. As a result, the bristles tend to exhibit less stress.

Even with this reduced clearance, the present invention does not exhibit the damage encountered by conventional brush seals during contact with the rotating component The aforementioned materials, such as a low coefficient of friction or low wear rate material, does not form burrs during such contact. Lacking burrs, the back plate does not nick or cut the bristles. With intact bristles, the efficiency of the brush seal tends not to degrade after contact between the back plate and the rotating component.

The present invention has been described in connection with the embodiments of the various figures. It is to be understood that other similar embodiments may be used or modifications and additions may be made to the described embodiment for performing the same function of the present invention without deviating therefrom. Therefore, the present invention should not be limited to any single embodiment, but rather construed in breadth and scope in accordance with the recitation of the appended claims.

## Claims

1. A brush seal (401), comprising:
a side plate (307);
a back plate (309); and
a annular bristle pack (411) between said side plate and said back plate,
said annular bristle pack (411) comprises a plurality of bristles (423) secured together by a joint (425), **characterised in that**
said side plate (307) and said back plate (309) are overmolded about said annular bristle pack (411) and are made from a low coefficient of friction or low wear rate material.

2. The brush seal as recited in claim 1 or 2, wherein said joint (425) is a weld joint.

3. The brush seal as recited in any preceding claim, wherein said annular bristle pack (411) comprises a bristle ring.

4. The brush seal as recited in any preceding claim, wherein said low coefficient of friction or low wear rate material is plastic.

5. The brush seal as recited in claim 4 wherein said material is PTFE.

6. The brush seal as recited in any preceding claim, wherein said brush seal is rigidly securable to a first component.

7. A method of reducing a clearance between a brush seal and a component, comprising the steps of:
forming a brush seal (401) by overmolding a side plate (307) and a back plate (309) about a bristle ring (411);
spacing said back plate (309) from said component at a reduced distance;
wherein said side plate (307) and back plate (309) are formed from a low coefficient of friction or low wear rate material which resists burring, and said reduced distance is less than a distance if said back plate (309) portion were not made from said material.

8. The method as recited in claim 7, wherein said reduced distance is at least approximately 10% less than said distance.

9. The method as recited in claim 7 or 8, wherein a joint (425) secures said bristles (423) together.

## Patentansprüche

1. Bürstendichtung (401), aufweisend:
eine Seitenplatte (307);
eine Rückenplatte (309); und
ein ringförmiges Borstenpaket (411) zwischen der Seitenplatte und der Rückenplatte, wobei das ringförmige Borstenpaket (411) eine Mehrzahl von Borsten (423) aufweist, die durch eine Verbindung (425) aneinander befestigt sind,
**dadurch gekennzeichnet, dass** die Seitenplatte (307) und die Rückenplatte (309) um das ringförmige Borstenpaket (411) herumgeformt sind und aus einem Material mit niedrigem Reibungskoeffizienten oder einem Material mit niedriger Verschleißrate gebildet sind.

2. Bürstendichtung nach Anspruch 1,
wobei die Verbindung (425) eine Schweißverbindung ist.

3. Bürstendichtung nach einem der vorausgehenden Ansprüche,
wobei das ringförmige Borstenpaket (411) einen Borstenring aufweist.

4. Bürstendichtung nach einem der vorausgehenden Ansprüche,
wobei es sich bei dem Material mit niedrigem Reibungskoeffizienten oder niedriger Verschleißrate um Kunststoffmaterial handelt.

5. Bürstendichtung nach Anspruch 4,
wobei es sich bei dem Material um PTFE handelt.

6. Bürstendichtung nach einem der vorausgehenden Ansprüche,
wobei die Bürstendichtung an einer ersten Komponente starr befestigbar ist.

7. Verfahren zum Reduzieren eines Freiraums zwischen einer Bürstendichtung und einer Komponente, wobei das Verfahren folgende Schritte aufweist:
Bilden einer Bürstendichtung (401) durch Herumformen einer Seitenplatte (307) und einer Rückenplatte (309) um einem Borstenring (411);
Anordnen der Rückenplatte (309) in einer reduzierten Distanz von der Komponente;
wobei die Seitenplatte (307) und die Rückenplatte (309) aus einem Material mit niedrigem Reibungskoeffizienten oder niedriger Verschleißrate gebildet werden, das sich einer Gratbildung widersetzt, und wobei die reduzierte Distanz geringer ist als eine Distanz, die vorhanden wäre, wenn der Bereich der Rückenplatte (309) nicht aus dem genannten Material hergestellt ist.

8. Verfahren nach Anspruch 7,
wobei die genannte reduzierte Distanz zumindest ca. 10% geringer ist als die genannte Distanz.

9. Verfahren nach Anspruch 7 oder 8,
wobei eine Verbindung (425) die Borsten (423) aneinander befestigt.

## Revendications

1. Joint d'étanchéité à brosse (401), comprenant :
une plaque latérale (307) ;
une plaque arrière (309) ; et
un ensemble annulaire de crins (411) entre ladite plaque latérale et ladite plaque arrière, ledit ensemble annulaire de crins (411) comprenant une pluralité de crins (423) fixés ensemble à l'aide d'un joint (425), **caractérisé en ce que**
ladite plaque latérale (307) et ladite plaque arrière (309) sont surmoulées autour dudit ensemble annulaire de crins (411) et sont constituées d'un matériau à faible coefficient de friction ou à faible taux d'usure.

2. Joint d'étanchéité à brosse selon la revendication 1 ou 2, dans lequel ledit joint (425) est un joint soudé.

3. Joint d'étanchéité à brosse selon l'une des revendications précédentes, dans lequel ledit ensemble annulaire de crins (411) comprend un anneau de crins.

4. Joint d'étanchéité à brosse selon l'une des revendications précédentes, dans lequel ledit matériau à faible coefficient de friction ou à faible taux d'usure est une matière plastique.

5. Joint d'étanchéité à brosse selon la revendication 4, dans lequel ledit matériau est du PTFE.

6. Joint d'étanchéité à brosse selon l'une des revendications précédentes, dans lequel ledit joint d'étanchéité à brosse peut être fixé de manière rigide à un premier composant.

7. Procédé de réduction d'un jeu entre un joint d'étanchéité à brosse et un composant, comprenant les étapes suivantes :
réalisation d'un joint d'étanchéité à brosse (401) en surmoulant une plaque latérale (307) et une plaque arrière (309) autour d'un anneau de crins (411) ;
éloignement de ladite plaque arrière (309) dudit composant d'une distance réduite ;
dans lequel ladite plaque latérale (307) et ladite plaque arrière (309) sont constituées d'un matériau à faible coefficient de friction ou à faible taux d'usure qui résiste à l'épaississement des bords et ladite distance réduite est inférieure à la distance utilisée si ladite plaque arrière (309) n'est pas constituée dudit matériau.

8. Procédé selon la revendication 7, dans lequel ladite distance réduite est inférieure d'au moins environ 10% par rapport à ladite distance.

9. Procédé selon la revendication 7 ou 8, dans lequel un joint (425) fixe lesdits crins (423) ensemble.
